# EUROPÄISCHE PATENTSCHRIFT

(11) **EP 4 469 259 B1**
(45) Veröffentlichungstag und Bekanntmachung des Hinweises auf die Patenterteilung: **06.08.2025**
(21) Anmeldenummer: 23761444.1
(22) Anmeldetag: 16.08.2023
(51) Int. Cl.: B29C 55/24, B21D 37/16, B29D 23/20, B21D 51/36, B21D 41/02, B21D 51/10, B29L 23/00, B29L 23/20

(54) **VERFAHREN UND VORRICHTUNG ZUM AUFWEITEN VON TUBENROHLINGEN**
METHOD AND DEVICE FOR EXPANDING TUBE BLANKS
PROCÉDÉ ET DISPOSITIF DE DILATATION D'ÉBAUCHES DE TUBES

(30) Priorität: 18.04.2023 CH 3972023
(43) Veröffentlichungstag der Anmeldung: 04.12.2024
(73) Patentinhaber: Hoffmann Neopac AG, 3602 Thun (CH)
(72) Erfinder: WAGNER, Michael, 3672 Oberdiessbach (CH); EBERHARD, Kristijan, 4554 Etziken (CH)
(74) Vertreter: E. Blum & Co. AG
(86) Internationale Anmeldenummer: PCT/EP2023/072585
(87) Internationale Veröffentlichungsnummer: WO 2024/217709

(56) Entgegenhaltungen:
- EP-A1- 0 098 669
- DE-A1- 2 752 416
- DE-B- 1 125 144
- FR-A1- 2 204 492

## Beschreibung

### Gebiet der Erfindung

Die Erfindung betrifft ein Verfahren und eine Vorrichtung zum Aufweiten von initialen Tubenrohlingen aus Kunststoff oder aus Metall, gemäss dem jeweiligen unabhängigen Anspruch.

### Hintergrund

Es ist bekannt, anfänglich zylindrische Tubenrohlinge aufzuweiten, so dass sie eine konische Form bekommen. Solche Verfahren wurden entwickelt um bei der Lagerung und beim Transport von Tubenrohlingen Platz zu sparen, da im Gegensatz zur zylindrischen Form eine konische Form das Ineinanderstecken der Rohlinge ermöglicht. Die bisherigen Verfahren umfassen eine Vielzahl von Schritten, bis ein konischer Tubenrohling erreicht wird. Viele dieser Schritte dienen nicht der eigentlichen Aufweitung des zylindrischen Rohlings, sondern einerseits zum Sicherstellen, dass der Rohling beim Aufweiten nicht reisst, und andererseits zum Entfernen des konischen Rohlings von der Aufweitvorrichtung.

Beispielsweise offenbart EP0098669 ein Verfahren und eine Vorrichtung, bei den in einer Phase B die Tube auf einen vorgeheizten Dorn aufgestülpt wird. In einer Phase C wird ein Oberwerkzeug auf das Ensemble des Dorns mit der Tube gestülpt und bis zum Anschlag auf den Dorn getrieben, wobei die Tube mittels Kaltumformung aufgeweitet wird. Nach Entfernen des Oberwerkzeugs wird die sich immer noch auf dem Dorn befindliche Tube in einer Phase D nochmals erhitzt und schliesslich in einer Phase E auf dem Dorn abgekühlt, bevor die konische Tube entfernt werden kann.

Die französische Patentanmeldung FR 2204492 A1 offenbart ein Verfahren zum Aufweiten eines Teils eines Tubenrohlings, bei dem sich dieser Teil zum Deckel hin verjüngt. In einem ersten Schritt wird der Rohling lose in einer Hülse platziert. In einem zweiten Schritt wird ein Dorn in den Rohling eingeführt. Dabei wird die Ausrichtung des Rohlings am Dorn mittels eines Luftstroms bewerkstelligt und aufrechterhalten. Nachdem der Dorn im Rohling eingeführt wurde, wird er stark erhitzt. Der Dorn wird im Rohling für eine Zeitspanne gehalten, die so lang ist, dass der Rohling nicht anfängt zu schmelzen. Schliesslich wird der Dorn abgekühlt und herausgezogen.

Die deutsche Patentanmeldung DE 1125144 befasst sich mit einem Verfahren zum Aufweiten von Rohren aus Polyolefinen oder Trifluorchloräthylen. Dabei wird ein vorgeheizter Dorn in den Rohling eingeführt und nach der Aufweitung abgekühlt.

### Darstellung der Erfindung

Die zu lösende Aufgabe besteht darin, die Herstellung von konischen Tubenrohlingen ausgehend von zylindrischen Tubenrohlingen zu vereinfachen.

Diese Aufgabe wird vorliegend gemäss **einem ersten Aspekt der Erfindung** mittels eines Verfahrens zum Aufweiten mindestens eines Teils eines initialen Tubenrohlings aus Kunststoff oder Metall, derart dass sich ein aufgeweiteter Tubenrohling ergibt, der sich in Richtung eines vom Aufweitvorgang nicht betroffenen Endes des Tubenrohlings verjüngt, gelöst. In einem ersten Schritt a) des Verfahrens wird der initiale Tubenrohling in einer Haltevorrichtung in einer ersten Position fixiert, wobei die Haltevorrichtung entweder einstückig ist und eine Ausnehmung aufweist, in der der Tubenkopf des Tubenrohlings eingesteckt wird, oder die Haltevorrichtung mehrere Backen umfasst, mittels welchen der Tubenkopf nach dessen Positionierung umschlossen wird. Danach wird in einem zweiten Schritt b) ein auf eine erste Soll-Temperatur vorgeheizter erster Dorn in den initialen Tubenrohling eingeführt. Dabei fällt eine Längsachse des ersten Dorns mit einer Längsachse des initialen Tubenrohlings zusammen. Ein Maximaldurchmesser des ersten Dorns ist dabei grösser als ein Maximaldurchmesser des initialen Tubenrohlings, so dass der Tubenrohling aufgeweitet werden kann. In einem dritten Schritt c) wird der erste Dorn in den Innenraum des initialen Tubenrohlings bis zu einer bestimmungsgemässen Tiefe eingepresst und für eine vorbestimmte Heizzeitspanne in der eingepressten Position gehalten, so dass mindestens ein Teil des Tubenrohlings aufgeweitet wird. Schliesslich wird in einem vierten Schritt d) der erste Dorn aus dem aufgeweiteten Tubenrohling herausgezogen, wobei beim Herausziehen des ersten Dorns aus dem aufgeweiteten Tubenrohling Druckluft in den Innenraum des konischen Tubenrohlings durch den mit mindestens einem entsprechenden ersten Luftkanal versehenen ersten Dorn geblasen wird.

Die Aufgabe wird weiter gemäss **einem zweiten Aspekt der Erfindung** mittels einer Vorrichtung zum Aufweiten mindestens eines Teils eines initialen Tubenrohlings aus Kunststoff oder Metall, derart dass sich ein aufgeweiteter Tubenrohling ergibt, der sich in Richtung eines vom Aufweitvorgang nicht betroffenen Endes des Tubenrohlings verjüngt, gelöst, unter Verwendung des Verfahrens gemäss dem ersten Aspekt der Erfindung. Weiter umfasst sie einen ersten Dorn mit einem maximalen Durchmesser, der grösser ist als der Maximaldurchmesser des initialen Tubenrohlings, wobei der erste Dorn mindestens einen ersten Luftkanal zum Einleiten von Druckluft in den Innenraum des aufgeweiteten Tubenrohlings umfasst, wobei ein Einlass des ersten Luftkanals in einem Bereich des ersten Dorns angesiedelt ist, der nicht in den Tubenrohling eintritt, und der erste Luftkanal im Bereich eines freien Endes des ersten Dorns mündet. Weiter umfasst sie eine Heizung zum Vorheizen des ersten Dorns auf die erste Soll-Temperatur und einen ersten Linearantrieb zum linearen hin und her Verschieben des ersten Dorns aus einer Anfangsposition, in der der erste Dorn vollständig ausserhalb des in der ersten Position fixierten initialen Tubenrohlings angeordnet ist, und der eingepressten Position. Erfindungsgemäss umfasst die Vorrichtung eine Haltevorrichtung zum Fixieren des initialen Tubenrohlings in der ersten Position, wobei die Haltevorrichtung entweder einstückig ist und eine Ausnehmung aufweist, in der der Tubenkopf des zylindrischen Tubenrohlings einsteckbar ist, oder die Haltevorrichtung mehrere Backen umfasst, die den Tubenkopf nach dessen Positionierung umschliessen.

Die vorliegende Erfindung hat den Vorteil, dass nur ein einziges Element, der erste Dorn, für das Aufweiten zuständig ist und keine Interaktion mit einem weiteren Element notwendig ist, wie **z.B.** beim **o.g.** Verfahren des Stands der Technik, bei dem ein Oberwerkzeug mit einem Dorn kooperieren muss. Hier kann der aufzuweitende initiale Tubenrohling in einer einfachen Haltevorrichtung an einem Ende gehalten werden, während einzig und allein mit einem auf und ab bewegbaren Dorn darauf eingewirkt wird. Weiter kann auch ein Schritt des Wiederaufwärmens des Tubenrohlings mittels eines Infrarotstrahlers eingespart werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Schnittansicht eines noch nicht bearbeiteten zylindrischen Tubenrohlings,
Fig. 2 eine Schnittansicht des Tubenrohling aus Fig. 1 während des erfindungsgemässen Aufweitprozesses mit einem darin eingepressten ersten Dorn,
Fig. 3 eine Schnittansicht des fertigen konischen Tubenrohlings,
Fig. 4 eine Draufsicht eines aufgeweiteten Tubenrohlings mit ovalem Querschnitt,
Fig. 5 eine Draufsicht eines aufgeweiteten Tubenrohlings mit kreisrundem Querschnitt,
Fig. 6 eine Draufsicht eines aufgeweiteten Tubenrohlings mit sternförmigem Querschnitt, und
Fig. 7 eine Ausführungsform einer erfindungsgemässen Vorrichtung zur Herstellung des konischen Tubenrohlings aus Fig. 3 bzw. **5.**

### Wege zur Ausführung der Erfindung

Vorliegend umfasst die Bezeichnung "Tubenrohling" insbesondere dreidimensionale Behälter aus Kunststoff in der Art von Tuben für Zahnpasta, Lotionen, usw. oder aus Metall in der Art von Tuben für Ölfarben, Wasserfarben, usw.

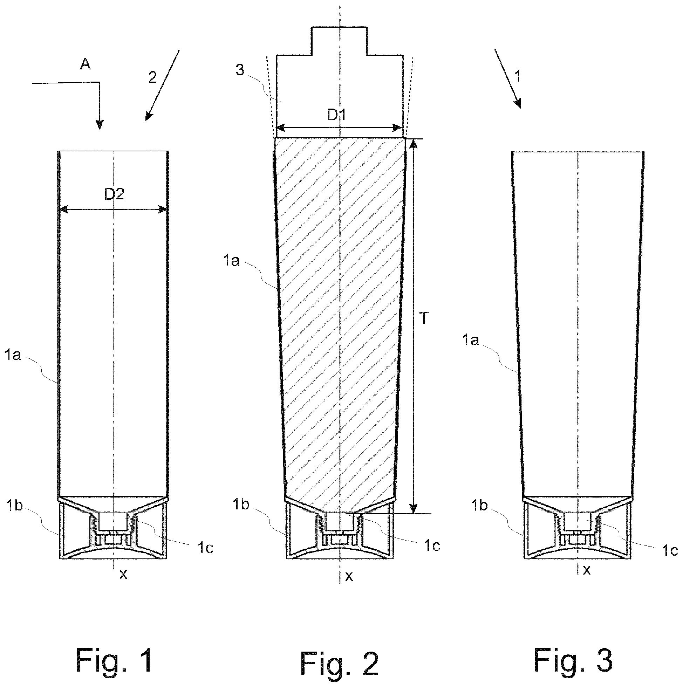

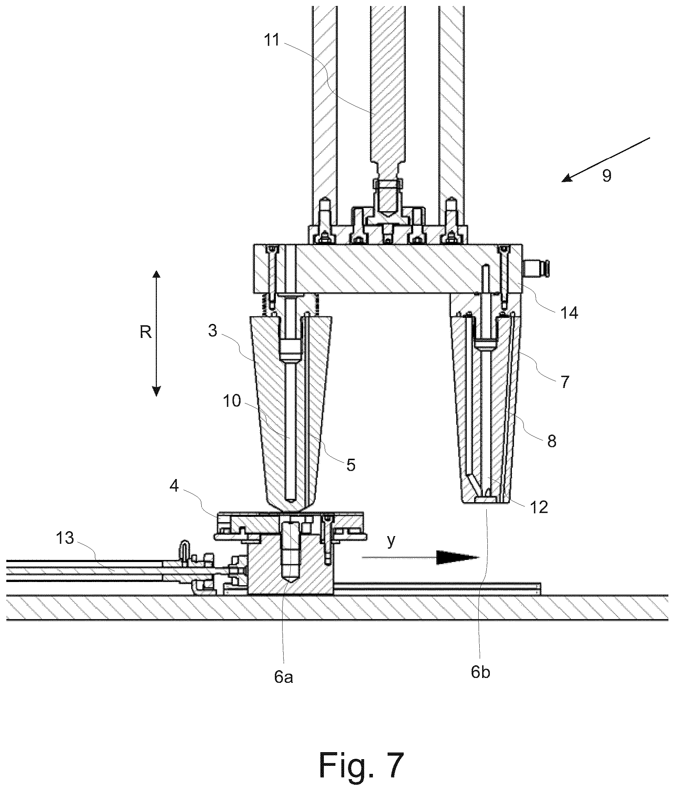

Ein solcher Tubenrohling kann vor der Bearbeitung mittels der vorliegenden Erfindung beidseitig offen sein, also ein einfaches Rohr sein, oder er kann an einem Ende geschlossen sein. Zum Beispiel kann mit Blick auf Fig. 1 der zylindrische Tubenrohling 2 einen zylindrischen Tubenkörper 1a und an einem Ende einen Tubenkopf 1b aufweisen, der für die spätere Abgabe von Tubeninhalt aus der Öffnung 1c und für das Verschliessen der Tube zuständig ist. Vorliegend ist es bevorzugt wenn der Tubenkopf bereits am Tubenkörper angebracht ist oder mit dem Tubenkörper in einem Stück hergestellt wurde, da der Tubenkopf für die aufweitende Bearbeitung des Tubenkörpers auf einfache Weise aufgrund seines vergleichsweise starren Gebildes als Mittel zum Halten des Tubenrohlings in einer Haltevorrichtung 4 (Fig. 7) verwendet werden kann. Ausserdem gibt das starre Gebilde auch dem Tubenkörper mehr strukturellen Halt.

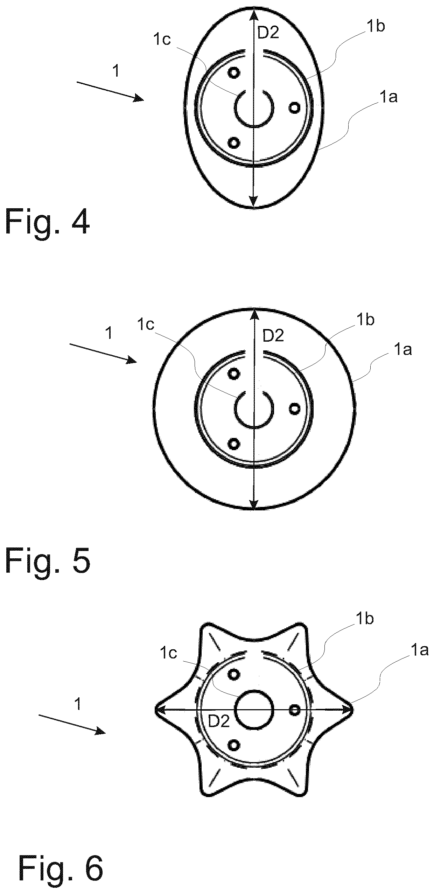

Nachfolgend wird die Erfindung detailliert anhand eines zylindrischen Tubenrohlings erläutert. Andere Typen von Tubenrohlingen werden im Kontext von Fig. 4-6 beschrieben. Der zylindrische Tubenrohling ist hier beispielhaft aus einem thermoplastischen Kunststoff z.B. durch Extrusion oder als längsverschweisste Kunststofftube oder als spritzgegossene Kunststofftube hergestellt. Das ist bekannt und wird hier nicht im Detail beschrieben. Tubenrohlinge aus Metall können gemäss anderen für diese Anwendung bekannten Verfahren hergestellt sein. In diesem Zusammenhang wird angemerkt, dass die nachfolgend für die Anwendung bei Kunststoffrohlingen beschriebene Erfindung mutatis mutandis für Metallrohlinge gilt, wobei manche Parameter u.U. geändert werden müssen, z.B. Temperaturwerte zum Aufheizen des Rohlings. Die grundsätzlichen Schritte des erfindungsgemässen Aufweitverfahrens und der strukturelle Aufbau der erfindungsgemässen Herstellungsvorrichtung bleiben gleich.

Die **Figuren 1 bis** 3 zeigen die Abfolge eines Tubenrohlings vom initialen Zustand aus Fig. 1 bis zum Endzustand des behandelten nun konischen Tubenrohlings. Wird nachfolgend nur von "Tubenrohling" oder "Rohling" o.ä. gesprochen, so handelt es sich um Eigenschaften für die der Zustand keine Rolle spielt oder um einen Übergangszustand zwischen dem initialen Zustand und dem Endzustand. Im initialen Zustand des unbehandelten zylindrischen Tubenrohlings hat dieser einen konstanten Durchmesser D2. In Fig. 2 ist der Zustand während des Aufweitprozesses gezeigt, bei dem ein erster Dorn 3 zum Aufweiten des Tubenrohlings bis zu einer Tiefe T in einer eingepressten Position in den Tubenrohling eingeführt ist und diesen konisch aufweitet, so dass sich ein Maximaldurchmesser D1 des konischen Tubenrohlings ergibt, der grösser als der ursprüngliche Durchmesser D2 ist. Der erste Dorn 3 hat also einen minimalen Durchmesser der kleiner ist als ein Durchmesser D2 des zylindrischen Tubenrohlings, so dass er in diesen eingeführt werden kann, und einen maximalen Durchmesser der grösser ist als der Durchmesser des zylindrischen Tubenrohlings, so dass der letztere aufgeweitet werden kann. Dabei entspricht aber dieser maximale Durchmesser des ersten Dorns nicht unbedingt dem Durchmesser D1; er kann noch grösser als dieser Durchmesser sein. Der Grund dafür ist, dass aufgrund der konischen Ausbildung des ersten Dorns dieser für verschiedene Tubengrössen verwendet werden kann und nicht ausgetauscht werden muss. Das ist in Fig. 2 mit den gestrichelten Linien angedeutet. So wäre hier entsprechend auch eine grössere Aufweitung für einen grösseren Tubenrohling möglich. Fig. 3 zeigt den fertigen konisch aufgeweiteten Tubenrohling.

**Fig. 4 bis** 6 zeigen in Draufsicht in Richtung des Pfeils A aus Fig. 1 Beispiele verschiedener möglicher Querschnitte des Tubenrohlings, wobei die Erfindung nicht auf diese Querschnittsformen limitiert ist. Es handelt sich in der Figuren um bereits bearbeitete, also aufgeweitete Tubenrohlinge 1 die sich in die Zeichenebene hinein gesehen verjüngen. Fig. 4 zeigt einen aufgeweiteten Tubenrohling mit ovalem Querschnitt, Fig. 5 einen aufgeweiteten Tubenrohling mit rundem Querschnitt und Fig. 6 einen aufgeweiteten Tubenrohling mit sternförmigem Querschnitt. Dabei ist sichtbar, dass der Tubenkopf 1b vorzugsweise immer rund ist. Im bevorzugten Fall eines Tubenrohlings mit bereits vorhandenem Tubenkopf ist die Form des Tubenkörpers 1a so, dass vom freien Ende des Tubenkörpers gesehen, wo der Aufweitprozess beginnt, in Richtung des Tubenkopfes der Tubenkörper im initialen Zustand einen im Wesentlichen bezüglich Form und Maximaldurchmesser mindestens bereichsweise konstanten Verlauf hat. Mit anderen Worten ist die Mantelfläche des Tubenkörpers mindestens bereichsweise parallel zur Längsachse x des Tubenkörpers. Das heisst, dass der Querschnitt des Tubenkörpers in diesem Bereich gleichbleibend ist. Lediglich in einem Bereich unmittelbar in der Nähe des Tubenkopfes kann sich der Querschnitt des Tubenkörpers ändern, was aber für den Aufweitvorgang keine Rolle spielt.

Bei einem Tubenkörper mit kreisförmigem Querschnitt (Fig. 5) ist das nicht der Fall, da der Durchmesser des Tubenkörpers dem Durchmesser des Tubenkopfes entspricht und der kreisförmige Querschnitt des Tubenkörpers dem kreisförmigen Querschnitt des Tubenkopfes entspricht.

Bei einem Tubenkörper mit ovalem Querschnitt (Fig. 4) oder sternförmigem Querschnitt (Fig. 6) geht im Bereich unmittelbar in der Nähe des Tubenkopfes der ovale bzw. der sternförmige Querschnitt des Tubenkörpers in einen kreisförmigen Querschnitt über, derart, dass der Tubenkopf bündig am Tubenkörper anschliesst. Die initialen Tubenrohlinge können beliebige Querschnittsformen haben, die entweder eine kontinuierliche Kontur aufweisen, hier beispielhaft die ovale Kontur, oder eine mit Ecken versehene Kontur aufweisen, hier beispielhaft die sternförmige Kontur. In diesem Kontext wird auch angemerkt, dass beim Durchmesser D2 sich immer um das maximale Durchmesser handelt, der bei der betreffenden Querschnittsform vorliegt, in der Art wie die Durchmesser in Fig. 4-6 absichtlich in der gezeigten Position eingezeichnet sind. Obwohl die Tubenkörper mit anderen Querschnittsformen als der kreisrunden Querschnittsform auch gewissermassen als zylindrisch aufgrund ihrer länglichen Ausdehnung zu betrachten sind, wird vorliegend der Einfachheit halber von "zylindrischen Tubenrohlingen" in Zusammenhang mit dem hier betrachteten Beispiel der kreisrunden Querschnittsform gesprochen. Genauso verhält es sich mit dem Begriff "konisch" der allgemein aus "sich verjüngend" unabhängig vom Querschnitt interpretiert werden soll.

Selbstverständlich ist für jede Querschnittsform der Tubenrohlinge ein entsprechender erster und ggf. zweiter Dorn vorgesehen. Bei einer ovalen Querschnittsform des initialen zylindrischen Tubenrohlings sind die Dornen entsprechend konisch oval und verjüngen sich in Richtung der Einführung in den Tubenrohling, wobei ab einer gewissen Einführtiefe die Aufweitung beginnt, wenn der Durchmesser des ersten Dorns den Maximaldurchmesser des Tubenrohlings übersteigt und sich weiter stetig vergrössert. Beim kreisrunden Querschnitt des Tubenrohlings hat der erste Dorn bzw. der zweite Dorn die Form eines Konus. Beim sternförmigen Querschnitt des Tubenrohlings sind die Dornen auch sternenförmig im Querschnitt und verjüngen sich in der Art wie oben für den ovalen Querschnitt beschrieben. Es wird angemerkt, dass im ganzen Dokument die Querschnittsform beim freien Ende des initialen Tubenrohlings, wo dieser aufgeweitet wird, als repräsentativ angenommen wird. Allfällige Änderungen der Querschnittsform beim Übergang zum Tubenkopf werden vernachlässigt.

Der erste und der zweite Dorn sind vorzugsweise aus einem geeigneten Metall, z.B. Stahl, hergestellt. Sie können aber auch aus einem anderen Material, das bei den geforderten Temperaturen formstabil ist, hergestellt sein.

In **Fig.** 7 ist eine vereinfachte Ausführungsform einer erfindungsgemässen Vorrichtung 9 zur Herstellung des konischen Tubenrohlings aus Fig. 3 gezeigt. Zur Vereinfachung ist hier kein Tubenrohling gezeigt.

Die Vorrichtung 9 umfasst eine Haltevorrichtung 4 zum Fixieren des zylindrischen Tubenrohlings 2 in einer ersten Position 6a. Die erste Position, sowie eine später erläuterte zweite Position 6b beziehen sich auf eine vorzugsweise waagerechte Transportrichtung y (siehe Pfeil) eines Tubenrohlings. Die Haltevorrichtung kann einstückig sein und eine Ausnehmung aufweisen, in der der Tubenkopf des zylindrischen Tubenrohlings einsteckbar ist, oder sie kann mehrere Backen umfassen, die den Tubenkopf 1b nach dessen Positionierung umschliessen, was für in der Grösse variierenden Tubenrohlinge bevorzugt ist.

Die Vorrichtung 9 umfasst weiter den bereits erwähnten konischen ersten Dorn 3. Wie bereits beschrieben können die zu bearbeitenden Tubenrohlinge verschiedene Querschnittsformen haben. Entsprechend sind in der Vorrichtung zum Aufweiten von Tubenrohlingen mehrere erste Dornen mit unterschiedlichen Querschnittsformen vorgesehen. Insbesondere können diese eine kreisförmige oder ovale oder sternförmige Querschnittsform haben, welche jeweils initialen Tubenrohlingen mit entsprechend gleicher Querschnittsformen zugeordnet sind (siehe Fig. 4-6). Bei einem Austausch eines ersten initialen Tubenrohlings mit einem zweiten initialen Tubenrohling mit anderem Querschnitt wird der zum Einsatz kommende erste Dorn für den ersten Tubenrohling entsprechend mit einem zweiten Dorn für den zweiten Tubenrohling in der Vorrichtung ausgetauscht. Für die hier beispielhaft beschriebene Ausführungsform des initialen Tubenrohlings als zylindrisch mit kreisrundem Querschnitt werden also Dornen verwendet, die auch einen kreisrunden Querschnitt haben und sich konisch verjüngen. Nachfolgend wird stellvertretend für alle Typen von verwendbaren Dornen entsprechend von konischen Dornen gesprochen.

Um beim Aufweiten des zylindrischen Tubenrohlings dessen Riss zu vermeiden wird dieser erwärmt. Dazu ist der erste Dorn 3 mit einer Heizung 10 versehen, die den ersten Dorn auf eine erste Soll-Temperatur aufheizt, bevor der erste Dorn in den Tubenrohling 2 eingeführt wird. Die erste Soll-Temperatur kann für verschiedene Typen des thermoplastischen Kunststoffs variieren und ist so gewählt, dass der zylindrische Tubenrohling eine Kaltverformung erfährt, so dass er nach der Bearbeitung und dem anschliessenden Abkühlen die ursprüngliche Form behält.

Es ist dabei bevorzugt wenn die Heizung 10 einen ersten Temperatursensor und eine erste Steuerung umfasst (nicht gezeigt), um die Ist-Temperatur des ersten Dorns zu kontrollieren. Die erste Steuerung stellt basierend auf einer vom ersten Temperatursensor gemessenen Ist-Temperatur des ersten Dorns die erste Soll-Temperatur des ersten Dorns ein. Es ist bevorzugt wenn nach dem Aufweiten jedes zylindrischen Tubenrohlings oder einer Anzahl von zylindrischen Tubenrohlingen die erste Soll-Temperatur des ersten Dorns überprüft und eingestellt wird. Die Einstellung geschieht in Abhängigkeit von einem Temperaturabfall des ersten Dorns aufgrund einer Hitzeeintragung aus dem ersten Dorn in den Tubenrohling. Je nach Temperaturabfall wird der erste Dorn wieder auf die erste Soll-Temperatur aufgeheizt, bevor ein nächster zylindrischer Tubenrohling mit dem ersten Dorn bearbeitet wird. Es kann aber auch sein, dass aufgrund von materialbedingten Temperaturtoleranzen die erste Soll-Temperatur des ersten Dorns erst nach einer Anzahl von bearbeiteten konischen Tubenrohlingen 1 eingestellt werden muss. Die Heizung ist vorzugsweise derart ausgestaltet, dass sie im Rahmen der Erfahrungswerte für mögliche Temperaturschwankungen in der Vorrichtung das Aufheizen des ersten Dorns auf die erste Soll-Temperatur innerhalb einer festen Kadenzzeit bis zur Positionierung des nächsten Tubenrohlings 2 bewerkstelligen kann, so dass keine diesbezüglichen Verzögerungen auftreten.

Die Vorrichtung 9 umfasst weiter einen ersten Linearantrieb 11 zum linearen hin und her Verschieben (Pfeil R) des ersten Dorns 3 zwischen einer Anfangsposition, in der der erste Dorn vollständig ausserhalb des in der ersten Position 6a fixierten zylindrischen Tubenrohlings 2 angeordnet ist, und der eingepressten Position.

Es ist besonders bevorzugt wenn die Vorrichtung 9 weiter einen konischen zweiten Dorn 7 umfasst, der dem ersten Dorn 3 bezogen auf Form und Volumen entspricht. Dieser zweite Dorn ist zum Abkühlen des bearbeiteten nun konischen Tubenrohlings 1 vorgesehen, was die Formsteifigkeit unmittelbar erhöht, so dass der konische Tubenrohling 1 ohne sich potentiell zu verformen direkt für die Weiterverarbeitung weiter transportiert werden kann.

In Zusammenhang mit dem zweiten Dorn 7 umfasst die Vorrichtung 9 weiter eine Kühleinrichtung 12 zum Kühlen des zweiten Dorns auf eine zweite Soll-Temperatur. Dabei kann es sich um einen Kreislauf mit einer Kühlflüssigkeit handeln. Die obigen Ausführungen für die erste Soll-Temperatur des ersten Dorns gelten hier mutatis mutandis. Insbesondere umfasst die Kühleinrichtung einen zweiten Temperatursensor und eine zweite Steuerung (nicht gezeigt), wobei die zweite Steuerung derart ausgestaltet ist, dass sie basierend auf einer vom zweiten Temperatursensor gemessenen Temperatur des zweiten Dorns die zweite Soll-Temperatur des zweiten Dorns einstellt, insbesondere nach dem Kühlen jedes konischen Tubenrohlings oder einer Anzahl von konischen Tubenrohlingen die zweite Soll-Temperatur des zweiten Dorns einstellt.

Die erste und die zweite Steuerung können identisch sein und als Gesamtsteuerung die Temperaturregelungen für den ersten und den zweiten Dorn übernehmen.

Analog wie beim ersten Dorn umfasst die Vorrichtung 9 vorzugsweise einen zweiten Linearantrieb zum linearen hin und her Verschieben (Pfeil R) des zweiten Dorns zwischen einer Anfangsposition, in der der zweite Dorn vollständig ausserhalb des konischen Tubenrohlings 1 angeordnet ist, und einer bestimmungsgemässen in den konischen Tubenrohling eingeführten Position zum Kühlen des konischen Tubenrohlings.

Der zweite Linearantrieb kann identisch mit dem ersten Linearantrieb 11 sein, was bevorzugt ist wenn beide Dornen an einem gemeinsamen Gestell 14 der Vorrichtung 9 befestigt sind und synchron arbeiten. Synchron arbeiten bedeutet hier, dass während ein zylindrischer Tubenrohling 2 aufgeweitet wird gleichzeitig ein konischer Tubenrohling 1 abgekühlt wird, so dass beide Dornen abgesenkt sind.

Erfindungsgemäss umfasst der erste Dorn 3 mindestens einen ersten Luftkanal 5 zum Einleiten von Druckluft in den Innenraum des konischen Tubenrohlings 1, wobei ein Einlass des ersten Luftkanals in einem Bereich des ersten Dorns angesiedelt ist, der nicht in den Tubenrohling eintritt, und der erste Luftkanal im Bereich eines freien Endes des ersten Dorns mündet. Das ist analog bevorzugt auch für den zweiten Dorn 7 vorgesehen, der mindestens einen zweiten Luftkanal 8 zum Einleiten von Druckluft in den Innenraum des konischen Tubenrohlings umfasst, wobei ein Einlass des zweiten Luftkanals in einem Bereich des zweiten Dorns angesiedelt ist, der nicht in den Tubenrohling eintritt, und der zweite Luftkanal im Bereich eines freien Endes des zweiten Dorns mündet. Diese Massnahme ist hilfreich beim Ablösen des jeweiligen Tubenrohlings vom jeweiligen Dorn. Mit anderen Worten verhindert diese Massnahme, dass der Tubenrohling aufgrund seiner konischen Form in Zusammenspiel mit einer gewissen Elastizität am Dorn "kleben" bleibt. Alternativ jedoch nicht erfindungsgemäss könnte der jeweilige Tubenrohling mechanisch abgestreift werden. Alternativ könnte der Tubenrohling in der Haltevorrichtung so festgehalten werden, dass die Festhaltekraft den Tubenrohling zurückbehält wenn der Dorn nach oben verschoben wird. Die erste Alternative ist jedoch bevorzugt da sie ein schonenderes Ablösen des Tubenrohlings erlaubt.

In Ausführungsformen umfasst die Haltevorrichtung 4 einen Antrieb 13, so dass der konische Tubenrohling aus der ersten Position 6a in die oben erwähnte zweite Position 6b zum Abkühlen transportierbar ist.

Die Haltevorrichtung 4 kann in einer Ausführungsform als mittels des Antriebs 13 intermittierend betriebene umlaufende Fördereinrichtung oder intermittierend betriebene rotierende Revolvereinrichtung mit mehreren Aufnahmen für zylindrische Tubenrohlinge ausgestaltet sein. Alternativ kann sie als Ladetisch ausgebildet sein. Die Haltevorrichtung wird im Zusammenhang der nun folgenden Beschreibung des Herstellungsprozesses der aufgeweiteten konischen Tubenrohlinge weiter präzisiert.

In einem ersten Schritt a) des erfindungsgemässen Verfahrens wird der zylindrische Tubenrohling 2 in der Haltevorrichtung in der ersten Position 6a fixiert. Dazu hat die Haltevorrichtung entsprechende Aufnahmen die bereits beschrieben worden sind. Als nächstes wird in einem Schritt b) der auf die erste Soll-Temperatur vorgeheizte erste Dorn in den zylindrischen Tubenrohling eingeführt, wobei die Längsachse des ersten Dorns mit der Längsachse x (Fig. 1-3) des zylindrischen Tubenrohlings zusammenfällt. Danach wird in einem Schritt c) der erste Dorn in den Innenraum des zylindrischen Tubenrohlings bis zur bestimmungsgemässen Tiefe T eingepresst, wobei sich bei diesem Schritt der Tubenrohling aufweitet. Der erste Dorn wird für eine vorbestimmte Heizzeitspanne in der eingepressten Position gehalten. Schliesslich wird der erste Dorn aus dem konischen Tubenrohling 1 unter Einsatz der **o.g.** Hilfsmittel zum Lösen des konischen Tubenrohlings herausgezogen.

Wie bereits erwähnt ist es besonders bevorzugt wenn der zweite Dorn zum Abkühlen des aufgeweiteten konischen Tubenrohlings zum Einsatz kommt.

Beim Einsatz des zweiten Dorns wird der konische Tubenrohling 1 in der Haltevorrichtung 4 aus der ersten Position 6a in die zweite Position 6b nach dem Schritt d) des Herausziehens des ersten Dorns aus dem konischen Tubenrohling verbracht. Dazu kann die Haltevorrichtung wie oben beschrieben ausgestaltet sein. Ist sie als intermittierend betriebene umlaufende Fördereinrichtung ausgestaltet, so umfasst sie Aufnahmen die wie die Stufen einer Rolltreppe endlos zirkulieren, wobei zu jedem Zeitpunkt zwei Aufnahmen mit Tubenrohlingen bestückt sind. Ist sie alternativ als intermittierend betriebene rotierende Revolvereinrichtung ausgestaltet, so sind die Aufnahmen auf einer waagerechten Platte angeordnet, die sich intermittierend dreht, wobei zu jedem Zeitpunkt zwei Aufnahmen mit Tubenrohlingen bestückt sind. In jedem Fall ist die Bewegung der Fördereinrichtung intermittierend, d.h. sie geschieht schrittweise aufgrund der zwingenden Verweilzeit der Tubenrohlinge in der ersten Position 6a und eventuell in der zweiten Position 6b.

Die Vorrichtung 9 kann alternativ zu dem Konzept, dass die Tubenrohlinge zu den einzelnen Positionen bewegt werden, so ausgestaltet sein, dass die Tubenrohlinge stationär sind und der erste und der zweite Dorn bewegt werden. In dieser Ausführungsform ist die Haltevorrichtung 4 einfach gestaltet und kann lediglich eine Aufnahme zum Halten des Tubenrohlings aufweisen. Hier wird der beheizte erste Dorn 3 mit dem auf der zweiten Soll-Temperatur vorgekühlten zweiten Dorn 7 nach dem Schritt d) des Herausziehens des ersten Dorns aus dem konischen Tubenrohling (1) ausgetauscht. Dazu kann der bereits beschriebene Linearantrieb 11 eine zusätzliche Funktion haben, die das Gestell 14 in der Anfangsposition des ersten und zweiten Dorns, in der sich diese vollständig ausserhalb des zugeordneten Tubenrohlings befinden, waagerecht hin und her drehen, so dass für ein Tubenrohling abwechselnd der erste Dorn und der zweite Dorn zum Einsatz kommen. Diese Drehfunktion kann auch von einem separaten Drehantrieb übernommen werden.

Jedenfalls wird zum Kühlen des bearbeiteten konischen Tubenrohlings wie erwähnt der auf die zweite Soll-Temperatur vorgekühlte zweite Dorn im Wesentlichen bis zur bestimmungsgemässen Tiefe T in den konischen Tubenrohling eingeführt, wobei die Längsachse des zweiten Dorns mit der Längsachse x des konischen Tubenrohlings zusammenfällt, und der konische Tubenrohling gekühlt indem der zweite Dorn für eine vorbestimmte Kühlzeitspanne in der eingeführten Position gehalten wird. Schliesslich wird der zweite Dorn aus dem konischen Tubenrohling herausgezogen. Es wird angemerkt, dass im Gegensatz zu dem vergleichbaren Schritt beim ersten Dorn, bei dem aufgrund der beabsichtigten Formgebung von "Einpressen" die Rede ist, in diesem Fall keine Kraft auf den konischen Tubenrohling ausgeübt werden soll, um diesen nicht zu verformen. Es kann für die Kühlung sogar ausreichend sein, wenn der zweite Dorn den konischen Tubenrohling gar nicht berührt sondern nur in einem kleinen Abstand von den Innenwänden gehalten wird. Aus diesem Grund wurde oben von "in Wesentlichen bis zur bestimmungsgemässen Tiefe T eingeführt" gesprochen.

Die erste Alternative bei der der Tubenrohling verschoben wird und der erste und der zweite Dorn nur vertikal hin und her verschoben werden (Pfeil R) ist besonders bevorzugt um während der Kühlzeitspanne eines konischen Tubenrohlings gleichzeitig einen nächsten zylindrischer Tubenrohling aufzuweiten, was Zeit spart. Am meisten Zeit kann gespart werden wenn die Heizzeitspanne und die Kühlzeitspanne gleich gewählt werden. Das kann vorzugsweise durch eine entsprechende Einstellung der ersten und/oder der zweiten Soll-Temperatur geschehen, beispielsweise durch individuelle Änderung des Energieeintrags in den jeweiligen Dorn beim Kühlen oder Heizen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann. Begriffe wie "bevorzugt" oder "insbesondere" oder "besonders" oder "vorteilhaft" oder dergleichen bezeichnen daher nur optionale und beispielhafte Ausführungsformen.

## Patentansprüche

1. Verfahren zum Aufweiten mindestens eines Teils eines initialen Tubenrohlings (2) aus Kunststoff oder Metall, derart dass sich ein aufgeweiteter Tubenrohling (1) ergibt, der sich in Richtung eines vom Aufweitvorgang nicht betroffenen Endes des Tubenrohlings verjüngt, umfassend die Schritte:
a) Fixieren des initialen Tubenrohlings (2) in einer Haltevorrichtung (4) in einer ersten Position (6a), wobei die Haltevorrichtung entweder einstückig ist und eine Ausnehmung aufweist, in der der Tubenkopf (1b) des Tubenrohlings eingesteckt wird, oder die Haltevorrichtung mehrere Backen umfasst, mittels welchen der Tubenkopf (1b) nach dessen Positionierung umschlossen wird,
b) Einführen eines auf eine erste Soll-Temperatur vorgeheizten ersten Dorns (3) in den initialen Tubenrohling, wobei eine Längsachse des ersten Dorns mit einer Längsachse (x) des initialen Tubenrohlings zusammenfällt, wobei ein Maximaldurchmesser (D1) des ersten Dorns grösser als ein Maximaldurchmesser (D2) des initialen Tubenrohlings ist und eine Querschnittsform des ersten Dorns einer Querschnittsform des initialen Tubenrohlings entspricht,
c) Einpressen des ersten Dorns in den Innenraum des initialen Tubenrohlings bis zu einer bestimmungsgemässen Tiefe (T) und Halten des ersten Dorns für eine vorbestimmte Heizzeitspanne in der eingepressten Position, so dass mindestens ein Teil des initialen Tubenrohlings aufgeweitet wird,
d) Herausziehen des ersten Dorns aus dem aufgeweiteten Tubenrohling (1), wobei beim Herausziehen des ersten Dorns aus dem aufgeweiteten Tubenrohling Druckluft in den Innenraum des aufgeweiteten Tubenrohlings durch den mit mindestens einem entsprechenden ersten Luftkanal (5) versehenen ersten Dorn geblasen wird.

2. Verfahren nach Anspruch **1,** weiter umfassend die Schritte:
e) Verbringen des aufgeweiteten Tubenrohlings (1) in der Haltevorrichtung (4) aus der ersten Position (6a) in eine zweite Position (6b) nach dem Schritt d) des Herausziehens des ersten Dorns aus dem aufgeweiteten Tubenrohling,
f) Einführen eines auf eine zweite Soll-Temperatur vorgekühlten zweiten Dorns (7) bis zu einer bestimmungsgemässen Tiefe (T) in den aufgeweiteten Tubenrohling, wobei der zweite Dorn so gewählt wird, dass er dem ersten Dorn bezogen auf Form und Volumen entspricht und eine Längsachse des zweiten Dorns mit einer Längsachse (x) des aufgeweiteten Tubenrohlings zusammenfällt,
g) Kühlen des aufgeweiteten Tubenrohlings indem der zweite Dorn für eine vorbestimmte Kühlzeitspanne in der eingeführten Position gehalten wird, und
h) Herausziehen des zweiten Dorns aus dem aufgeweiteten Tubenrohling.

3. Verfahren nach Anspruch 1, weiter umfassend die Schritte:
e) Austauschen des vorgeheizten ersten Dorns (3) mit einem auf eine zweite Soll-Temperatur vorgekühlten zweiten Dorn (7) nach dem Schritt d) des Herausziehens des ersten Dorns aus dem aufgeweiteten Tubenrohling (1), wobei der zweite Dorn so gewählt wird, dass er dem ersten Dorn bezogen auf Form und Volumen entspricht,
f) Einführen des zweiten Dorns (7) bis zu einer bestimmungsgemässen Tiefe (T) in den aufgeweiteten Tubenrohling, wobei eine Längsachse des zweiten Dorns mit einer Längsachse (x) des aufgeweiteten Tubenrohlings zusammenfällt,
g) Kühlen des aufgeweiteten Tubenrohlings indem der zweite Dorn für eine vorbestimmte Kühlzeitspanne in der eingeführten Position gehalten wird, und
h) Herausziehen des zweiten Dorns aus dem aufgeweiteten Tubenrohling.

4. Verfahren nach einem der Ansprüche 2 oder 3, wobei die Heizzeitspanne und die Kühlzeitspanne gleich gewählt werden, insbesondere durch eine entsprechende Einstellung der ersten und/oder der zweiten Soll-Temperatur.

5. Verfahren nach einem der Ansprüche 2 oder 3, wobei beim Herausziehen des zweiten Dorns (7) aus dem aufgeweiteten Tubenrohling (1) Druckluft in den Innenraum des aufgeweiteten Tubenrohlings durch den mit mindestens einem zweiten Luftkanal (8) versehenen zweiten Dorn geblasen wird.

6. Verfahren nach einem der Ansprüche 2 oder 3, wobei nach dem Herausziehen des zweiten Dorns aus dem aufgeweiteten Tubenrohling eine Ist-Temperatur des zweiten Dorns mittels eines zweiten Temperatursensors gemessen wird und in Abhängigkeit von einem Temperaturanstieg aufgrund einer Kälteeintragung aus dem zweiten Dorn in den aufgeweiteten Tubenrohling der zweite Dorn wieder auf die zweite Soll-Temperatur gekühlt wird, bevor ein nächster aufgeweiteter Tubenrohling mit dem zweiten Dorn bearbeitet wird.

7. Verfahren nach einem der Ansprüche 2 bis 6, wobei während der Kühlzeitspanne eines aufgeweiteten Tubenrohlings ein nächster initialer Tubenrohling gemäss den Schritten des Verfahrens nach Anspruch 1 aufgeweitet wird.

8. Verfahren nach einem der vorangehenden Ansprüche, wobei nach dem Herausziehen des ersten Dorns aus dem aufgeweiteten Tubenrohling eine Ist-Temperatur des ersten Dorns mittels eines ersten Temperatursensors gemessen wird und in Abhängigkeit von einem Temperaturabfall aufgrund einer Hitzeeintragung aus dem ersten Dorn in den aufgeweiteten Tubenrohling der erste Dorn wieder auf die erste Soll-Temperatur aufgeheizt wird, bevor ein nächster initialer Tubenrohling mit dem ersten Dorn bearbeitet wird.

9. Verfahren nach einem der vorangehenden Ansprüche, wobei initiale Tubenrohlinge mit unterschiedlichen Querschnittsformen, insbesondere mit kreisförmiger oder ovaler oder sternförmiger Querschnittsform, aufgeweitet werden können, indem für jeden Typ von Querschnittsform des initialen Tubenrohlings ein passender erster Dorn bereitgestellt wird, dessen Querschnittsform diesem Typ entspricht.

10. Vorrichtung (9) zum Aufweiten mindestens eines Teils eines initialen Tubenrohlings (2) aus Kunststoff oder Metall, derart dass sich ein aufgeweiteter Tubenrohling (1) ergibt, der sich in Richtung eines vom Aufweitvorgang nicht betroffenen Endes des Tubenrohlings verjüngt, mittels des Verfahrens nach einem der vorangehenden Ansprüche, umfassend
einen ersten Dorn (3) mit einem Maximaldurchmesser (D1) der grösser ist als der Maximaldurchmesser (D2) des initialen Tubenrohlings (2), wobei der erste Dorn (3) mindestens einen ersten Luftkanal (5) zum Einleiten von Druckluft in den Innenraum des aufgeweiteten Tubenrohlings (1) umfasst, wobei ein Einlass des ersten Luftkanals in einem Bereich des ersten Dorns angesiedelt ist, der nicht in den Tubenrohling eintritt, und der erste Luftkanal im Bereich eines freien Endes des ersten Dorns mündet,
eine Heizung (10) zum Vorheizen des ersten Dorns auf die erste Soll-Temperatur,
einen ersten Linearantrieb (11) zum linearen hin und her Verschieben (R) des ersten Dorns (3) zwischen einer Anfangsposition, in der der erste Dorn vollständig ausserhalb des in der ersten Position (6a) fixierten initialen Tubenrohlings (2) angeordnet ist, und der eingepressten Position,
wobei eine Querschnittsform des ersten Dorns einer Querschnittsform des initialen Tubenrohlings entspricht,
**gekennzeichnet durch**
eine Haltevorrichtung (4) zum Fixieren des initialen Tubenrohlings (2) in der ersten Position (6a), wobei die Haltevorrichtung entweder einstückig ist und eine Ausnehmung aufweist, in der der Tubenkopf des zylindrischen Tubenrohlings einsteckbar ist, oder die Haltevorrichtung mehrere Backen umfasst, die den Tubenkopf (1b) nach dessen Positionierung umschliessen.

11. Vorrichtung nach Anspruch 10, weiter umfassend einen zweiten Dorn (7), der dem ersten Dorn bezogen auf Form und Volumen entspricht,
eine Kühleinrichtung (12) zum Kühlen des zweiten Dorns auf eine zweite Soll-Temperatur,
einen zweiten Linearantrieb zum linearen hin und her Verschieben (R) des zweiten Dorns zwischen einer Anfangsposition, in der der zweite Dorn vollständig ausserhalb des aufgeweiteten Tubenrohlings (1) angeordnet ist, und einer bestimmungsgemässen in den aufgeweiteten Tubenrohling eingeführten Position zum Kühlen des aufgeweiteten Tubenrohlings.

12. Vorrichtung nach Anspruch 11, wobei die Kühleinrichtung einen zweiten Temperatursensor und eine zweite Steuerung umfasst, wobei die zweite Steuerung derart ausgestaltet ist, dass sie basierend auf einer vom zweiten Temperatursensor gemessenen Ist-Temperatur des zweiten Dorns die zweite Soll-Temperatur des zweiten Dorns einstellt, insbesondere dass sie nach dem Kühlen jedes aufgeweiteten Tubenrohlings oder einer Anzahl von initialen Tubenrohlingen die zweite Soll-Temperatur des zweiten Dorns einstellt.

13. Vorrichtung nach einem der Ansprüche 10 bis 12, wobei die Heizung (10) einen ersten Temperatursensor und eine erste Steuerung umfasst, wobei die erste Steuerung derart ausgestaltet ist, dass sie basierend auf einer vom ersten Temperatursensor gemessenen Ist-Temperatur des ersten Dorns die erste Soll-Temperatur des ersten Dorns einstellt, insbesondere dass sie nach dem Aufweiten jedes initialen Tubenrohlings oder einer Anzahl von initialen Tubenrohlingen die erste Soll-Temperatur des ersten Dorns einstellt.

14. Vorrichtung nach einem der Ansprüche 10 bis 13 und Anspruch 11, wobei der zweite Dorn (7) mindestens einen zweiten Luftkanal (8) zum Einleiten von Druckluft in den Innenraum des aufgeweiteten Tubenrohlings umfasst, wobei ein Einlass des zweiten Luftkanals in einem Bereich des zweiten Dorns angesiedelt ist, der nicht in den aufgeweiteten Tubenrohling eintritt, und der zweite Luftkanal im Bereich eines freien Endes des zweiten Dorns mündet.

15. Vorrichtung nach einem der Ansprüche 10 bis 14, wobei die Haltevorrichtung mit einem Antrieb versehen ist, so dass der aufgeweitete Tubenrohling aus der ersten Position (6a) in eine zweite Position (6b) zum Abkühlen transportierbar ist, insbesondere wobei die Haltevorrichtung (4) entweder
als mittels des Antriebs (13) intermittierend betriebene umlaufende Fördereinrichtung mit mehreren Aufnahmen für initiale Tubenrohlinge oder
als mittels des Antriebs (13) intermittierend betriebene rotierende Revolvereinrichtung oder
als Ladetisch
ausgebildet ist.

16. Vorrichtung nach einem der Ansprüche 10 bis 15, umfassend mehrere erste Dornen mit unterschiedlichen Querschnittsformen, insbesondere mit kreisförmiger oder ovaler oder sternförmiger Querschnittsform, welche jeweils initialen Tubenrohlingen mit entsprechend gleicher Querschnittsformen zugeordnet sind, wobei bei einem Austausch eines ersten initialen Tubenrohlings mit einem zweiten initialen Tubenrohling mit anderem Querschnitt der zum Einsatz kommende erste Dorn für den ersten Tubenrohling entsprechend mit einem zweiten Dorn für den zweiten Tubenrohling in der Vorrichtung ausgetauscht wird.

## Claims

1. Method for expanding at least a part of an initial tube blank (2) made of plastic or metal in such a way that an expanded tube blank (1) is obtained which tapers in the direction of an end of the tube blank not affected by the expansion process, comprising the steps:
a) fixing the initial tube blank (2) in a holding device (4) in a first position (6a), wherein the holding device is either one-piece and has a recess into which the tube head (1b) of the tube blank is inserted, or the holding device comprises a plurality of jaws by means of which the tube head (1b) is enclosed after it has been positioned,
b) inserting a first mandrel (3) preheated to a first set temperature into the initial tube blank, wherein a longitudinal axis of the first mandrel coincides with a longitudinal axis (x) of the initial tube blank, wherein a maximum diameter (D1) of the first mandrel is greater than a maximum diameter (D2) of the initial tube blank, and a cross-sectional shape of the first mandrel corresponds to a cross-sectional shape of the initial tube blank,
c) pressing the first mandrel into the interior of the initial tube blank to a predetermined depth (T) and holding the first mandrel in the pressed-in position for a predetermined heating time period so that at least part of the initial tube blank is expanded,
d) pulling the first mandrel out of the expanded tube blank (1), wherein, when pulling the first mandrel out of the expanded tube blank, compressed air is blown into the interior of the expanded tube blank through the first mandrel provided with at least one corresponding first air channel (5).

2. Method according to claim 1, further comprising the steps of:
e) moving the expanded tube blank (1) in the holding device (4) from the first position (6a) to a second position (6b) after the step d) of pulling the first mandrel out of the expanded tube blank,
f) inserting a second mandrel (7), which has been precooled to a second set temperature, into the expanded tube blank substantially to the intended depth (T), the second mandrel being selected so that it corresponds to the first mandrel in terms of shape and volume and a longitudinal axis of the second mandrel coinciding with a longitudinal axis (x) of the expanded tube blank,
g) cooling the expanded tube blank by holding the second mandrel in the inserted position for a predetermined cooling time period; and
h) Pulling the second mandrel out of the expanded tube blank.

3. Method according to claim 1, further comprising the steps of:
e) replacing the preheated first mandrel (3) with a second mandrel (7) precooled to a second set temperature after step d) of extracting the first mandrel from the expanded tube blank (1), the second mandrel being selected to correspond to the first mandrel in terms of shape and volume,
f) inserting the second mandrel (7) into the expanded tube blank substantially to the intended depth (T), a longitudinal axis of the second mandrel coinciding with a longitudinal axis (x) of the expanded tube blank,
g) cooling the expanded tube blank by holding the second mandrel in the inserted position for a predetermined cooling time period; and
h) Pulling the second mandrel out of the expanded tube blank.

4. Method according to one of the claims 2 or 3, wherein the heating time period and the cooling time period are selected to be the same, in particular by a corresponding setting of the first and/or the second set temperature.

5. Method according to one of claims 2 or 3, wherein, when the second mandrel (7) is pulled out of the expanded tube blank (1), compressed air is blown into the interior of the expanded tube blank through the second mandrel provided with at least one second air channel (8).

6. Method according to one of claims 2 or 3, wherein, after the second mandrel has been pulled out of the expanded tube blank, an actual temperature of the second mandrel is measured by means of a second temperature sensor and, as a function of a temperature rise due to a cold input from the second mandrel into the expanded tube blank, the second mandrel is cooled again to the second desired temperature before a next expanded tube blank is processed with the second mandrel.

7. Method according to one of the claims 2 to 6, wherein during the cooling period of an expanded tube blank, a next initial tube blank is expanded according to the steps of the method according to claim 1.

8. Method according to one of the preceding claims, wherein after the first mandrel is pulled out of the expanded tube blank, an actual temperature of the first mandrel is measured by means of a first temperature sensor and, as a function of a temperature drop due to a heat input from the first mandrel into the expanded tube blank, the first mandrel is heated up again to the first set temperature before a next initial tube blank is processed with the first mandrel.

9. Method according to one of the preceding claims, wherein initial tube blanks with different cross-sectional shapes, in particular with circular or oval or star-shaped cross-sectional shape, can be expanded by providing for each type of cross-sectional shape of the initial tube blank a matching first mandrel whose cross-sectional shape corresponds to this type.

10. Device (9) for expanding at least a part of an initial tube blank (2) made of plastic or metal in such a way that an expanded tube blank (1) is obtained which tapers in the direction of an end of the tube blank which is not affected by the expansion operation, by means of the method according to one of the preceding claims, comprising
a first mandrel (3) having a maximum diameter (D1) which is greater than the maximum diameter (D2) of the initial tube blank (2), wherein the first mandrel (3) comprises at least one first air duct (5) for introducing compressed air into the interior of the expanded tube blank (1), wherein an inlet of the first air channel is located in a region of the first mandrel which does not enter the tube blank, and the first air channel opens in the region of a free end of the first mandrel,
a heater (10) for preheating the first mandrel to the first target temperature,
a first linear drive (11) for linearly displacing (R) the first mandrel (3) back and forth between an initial position, in which the first mandrel is arranged completely outside the initial tube blank (2) fixed in the first position (6a), and the pressed-in position,
wherein a cross-sectional shape of the first mandrel corresponds to a cross-sectional shape of the initial tube blank,
**characterized by**
a holding device (4) for fixing the initial tube blank (2) in the first position (6a), wherein the holding device is either one-piece and has a recess into which the tube head of the cylindrical tube blank can be inserted, or the holding device comprises a plurality of jaws which enclose the tube head (1b) after it has been positioned.

11. Device according to claim 10, further comprising a second mandrel (7) corresponding to the first mandrel in terms of shape and volume,
a cooling device (12) for cooling the second mandrel to a second set temperature,
a second linear drive for linear reciprocating movement (R) of the second mandrel between an initial position, in which the second mandrel is arranged completely outside the expanded tube blank (1), and a designated position inserted into the expanded tube blank for cooling the expanded tube blank.

12. Device according to claim 11, wherein the cooling device comprises a second temperature sensor and a second controller, wherein the second controller is configured to set the second set temperature of the second mandrel based on an actual temperature of the second mandrel measured by the second temperature sensor, in particular after cooling each expanded tube blank or a number of initial tube blanks.

13. Device according to one of the claims 10 to 12, wherein the heater (10) comprises a first temperature sensor and a first controller, wherein the first controller is configured to set the first set temperature of the first mandrel based on an actual temperature of the first mandrel measured by the first temperature sensor, in particular to set the first set temperature of the first mandrel after expanding each initial tube blank or a number of initial tube blanks.

14. Device according to one of the claims 10 to 13 and claim 11, wherein the second mandrel (7) comprises at least one second air channel (8) for introducing compressed air into the interior of the expanded tube blank, wherein an inlet of the second air channel is located in a region of the second mandrel that does not enter the expanded tube blank, and the second air channel opens in the region of a free end of the second mandrel.

15. Device according to one of claims 10 to 14, wherein the holding device is provided with a drive so that the expanded tube blank can be transported from the first position (6a) into a second position (6b) for cooling, in particular wherein the holding device (4) is configured either
as a circulating conveying device intermittently operated by means of the drive (13) with several receptacles for initial tube blanks or
as a rotating turret device intermittently operated by means of the drive (13) or
as loading table.

16. Device according to one of claims 10 to 15, comprising a plurality of first mandrels with different cross-sectional shapes, in particular with circular or oval or star-shaped cross-sectional shape, which are each assigned to initial tube blanks with correspondingly identical cross-sectional shapes, wherein, when a first initial tube blank is exchanged with a second initial tube blank with a different cross-section, the first mandrel used for the first tube blank is correspondingly exchanged with a second mandrel for the second tube blank in the device.

## Revendications

1. Procédé d'élargissement d'au moins une partie d'une ébauche de tube initiale (2) en matière plastique ou en métal, de manière à obtenir une ébauche de tube élargie (1) qui se rétrécit en direction d'une extrémité de l'ébauche de tube non concernée par le processus d'élargissement, comprenant les étapes suivantes :
a) fixer l'ébauche de tube initiale (2) dans un dispositif de maintien (4) dans une première position (6a), le dispositif de maintien étant soit d'une seule pièce et présentant un évidement dans lequel la tête de tube (1b) de l'ébauche de tube est insérée, soit le dispositif de maintien comprenant plusieurs mâchoires au moyen desquelles la tête de tube (1b) est entourée après son positionnement,
b) introduire un premier mandrin (3) préchauffé à une première température de consigne dans l'ébauche de tube initiale, un axe longitudinal du premier mandrin coïncidant avec un axe longitudinal (x) de l'ébauche de tube initiale, un diamètre maximal (D1) du premier mandrin étant supérieur à un diamètre maximal (D2) de l'ébauche de tube initiale et une forme de section transversale du premier mandrin correspondant à une forme de section transversale de l'ébauche de tube initiale,
c) enfoncer le premier mandrin dans l'espace intérieur de l'ébauche de tube initiale jusqu'à une prévue profondeur (T) et maintenir le premier mandrin dans la position enfoncée pendant une durée de chauffage prédéterminée, de sorte qu'au moins une partie de l'ébauche de tube initiale est élargie,
d) extraire le premier mandrin de l'ébauche de tube élargie (1), dans lequel, lors de l'extraction du premier mandrin de l'ébauche de tube élargie, de l'air comprimé est soufflé dans l'espace intérieur de l'ébauche de tube élargie à travers le premier mandrin pourvu d'au moins un correspondant premier canal d'air (5).

2. Procédé selon la revendication 1, comprenant en outre les étapes suivantes :
e) déplacer l'ébauche de tube élargie (1) dans le dispositif de maintien (4) de la première position (6a) à une deuxième position (6b) après l'étape d) d'extraction du premier mandrin de l'ébauche de tube élargie,
f) introduire un deuxième mandrin (7) prérefroidi à une deuxième température de consigne jusqu'à une prévue profondeur (T) dans l'ébauche de tube élargie, le deuxième mandrin étant choisi de manière à correspondre au premier mandrin en termes de forme et de volume et un axe longitudinal du deuxième mandrin coïncidant avec un axe longitudinal (x) de l'ébauche de tube élargie,
g) refroidir l'ébauche de tube élargie en maintenant le deuxième mandrin dans la position insérée pendant une durée de refroidissement prédéterminée, et
h) retirer le deuxième mandrin de l'ébauche de tube élargie.

3. Procédé selon la revendication 1, comprenant en outre les étapes suivantes :
e) remplacer le premier mandrin (3) préchauffé par un deuxième mandrin (7) prérefroidi à une deuxième température de consigne après l'étape d) d'extraction du premier mandrin de l'ébauche de tube (1) élargie, le deuxième mandrin étant choisi de manière à correspondre au premier mandrin en termes de forme et de volume,
f) introduire le deuxième mandrin (7) jusqu'à une prévue profondeur (T) dans l'ébauche de tube élargie, un axe longitudinal du deuxième mandrin coïncidant avec un axe longitudinal (x) de l'ébauche de tube élargie,
g) refroidir l'ébauche de tube élargie en maintenant le deuxième mandrin dans la position insérée pendant une durée de refroidissement prédéterminée, et
h) extraire le deuxième mandrin de l'ébauche de tube élargie.

4. Procédé selon l'une des revendications 2 ou 3, dans lequel l'intervalle de temps de chauffage et l'intervalle de temps de refroidissement sont choisis égaux, notamment par un réglage correspondant de la première et/ou de la deuxième température de consigne.

5. Procédé selon l'une des revendications 2 ou 3, dans lequel, lors de l'extraction du deuxième mandrin (7) de l'ébauche de tube élargie (1), de l'air comprimé est soufflé dans l'espace intérieur de l'ébauche de tube élargie à travers le deuxième mandrin muni d'au moins un deuxième canal d'air (8).

6. Procédé selon l'une des revendications 2 ou 3, dans lequel, après avoir retiré le deuxième mandrin de l'ébauche de tube élargie, une température réelle du deuxième mandrin est mesurée au moyen d'un deuxième capteur de température et, en fonction d'une augmentation de température due à un apport de froid du deuxième mandrin dans l'ébauche de tube élargie, le deuxième mandrin est refroidit à nouveau à la deuxième température de consigne avant de traiter une ébauche de tube élargie suivante avec le deuxième mandrin.

7. Procédé selon l'une des revendications 2 à 6, dans lequel, pendant la période de refroidissement d'une ébauche de tube élargie, une ébauche de tube initiale suivante est élargie selon les étapes du procédé selon la revendication 1.

8. Procédé selon l'une des revendications précédentes, dans lequel, après le retrait du premier mandrin de l'ébauche de tube élargie, une température réelle du premier mandrin est mesurée au moyen d'un premier capteur de température et, en fonction d'une chute de température due à un apport de chaleur du premier mandrin dans l'ébauche de tube élargie, le premier mandrin est à nouveau chauffé à la première température de consigne avant qu'une ébauche de tube initiale suivante soit traitée avec le premier mandrin.

9. Procédé selon l'une des revendications précédentes, dans lequel des ébauches de tubes initiales ayant différentes formes de section transversale, en particulier avec une forme de section transversale circulaire ou ovale ou en étoile, peuvent être élargies en fournissant, pour chaque type de forme de section transversale de l'ébauche de tube initiale, un premier mandrin approprié dont la forme de section transversale correspond à ce type.

10. Dispositif (9) pour élargir au moins une partie d'une ébauche de tube initiale (2) en matière plastique ou en métal, de manière à obtenir une ébauche de tube élargie (1) qui se rétrécit en direction d'une extrémité de l'ébauche de tube non concernée par le processus d'élargissement, au moyen du procédé selon l'une des revendications précédentes, comprenant
un premier mandrin (3) avec un diamètre maximal (D1) qui est plus grand que le diamètre maximal (D2) de l'ébauche de tube initiale (2), le premier mandrin (3) comprenant au moins un premier canal d'air (5) pour l'introduction d'air comprimé dans l'espace intérieur de l'ébauche de tube élargie (1), une entrée du premier canal d'air étant située dans une zone du premier mandrin qui n'entre pas dans l'ébauche de tube, et le premier canal d'air débouchant dans la zone d'une extrémité libre du premier mandrin,
un chauffage (10) pour préchauffer le premier mandrin à la première température de consigne,
un premier entraînement linéaire (11) pour le déplacement linéaire en va-et-vient (R) du premier mandrin (3) entre une position initiale, dans laquelle le premier mandrin est disposé entièrement à l'extérieur de l'ébauche de tube initiale (2) fixée dans la première position (6a), et la position enfoncée,
une forme de section transversale du premier mandrin correspondant à une forme de section transversale de l'ébauche de tube initiale,
**caractérisé par**
un dispositif de maintien (4) pour fixer l'ébauche de tube initiale (2) dans la première position (6a), le dispositif de maintien étant soit d'une seule pièce et présentant un évidement dans lequel la tête de tube de l'ébauche de tube cylindrique peut être insérée, soit le dispositif de maintien comprenant plusieurs mâchoires qui entourent la tête de tube (1b) après son positionnement.

11. Dispositif selon la revendication 10, comprenant en outre un deuxième mandrin (7), qui correspond au premier mandrin en termes de forme et de volume,
un dispositif de refroidissement (12) pour refroidir le deuxième mandrin à une deuxième température de consigne,
un deuxième entraînement linéaire pour le déplacement linéaire en va-et-vient (R) du deuxième mandrin entre une position initiale, dans laquelle le deuxième mandrin est disposé entièrement à l'extérieur de l'ébauche de tube élargie (1), et une position comme prévu introduite dans l'ébauche de tube élargie pour refroidir l'ébauche de tube élargie.

12. Dispositif selon la revendication 11, dans lequel le dispositif de refroidissement comprend un deuxième capteur de température et une deuxième commande, la deuxième commande étant configurée de telle sorte qu'elle règle la deuxième température de consigne du deuxième mandrin sur la base d'une température réelle du deuxième mandrin mesurée par le deuxième capteur de température, en particulier de telle sorte qu'elle règle la deuxième température de consigne du deuxième mandrin après le refroidissement de chaque ébauche de tube élargie ou d'un certain nombre d'ébauches de tube initiales.

13. Dispositif selon l'une des revendications 10 à 12, dans lequel le chauffage (10) comprend un premier capteur de température et une première commande, la première commande étant configurée de telle sorte qu'elle règle la première température de consigne du premier mandrin sur la base d'une température réelle du premier mandrin mesurée par le premier capteur de température, en particulier qu'elle règle la première température de consigne du premier mandrin après l'élargissement de chaque ébauche de tube initiale ou d'un nombre d'ébauches de tube initiales.

14. Dispositif selon l'une des revendications 10 à 13 et la revendication 11, dans lequel le deuxième mandrin (7) comprend au moins un deuxième canal d'air (8) pour introduire de l'air comprimé à l'intérieur de l'ébauche de tube élargie, une entrée du deuxième canal d'air étant située dans une zone du deuxième mandrin qui ne pénètre pas dans l'ébauche de tube élargie, et le deuxième canal d'air débouchant au niveau d'une extrémité libre du deuxième mandrin.

15. Dispositif selon l'une des revendications 10 à 14, dans lequel le dispositif de maintien est pourvu d'un entraînement, de sorte que l'ébauche de tube élargie peut être transportée de la première position (6a) à une deuxième position (6b) pour le refroidissement, en particulier dans lequel le dispositif de maintien (4) est conçu
soit sous la forme d'un dispositif de transport circulant, actionné par intermittence au moyen de l'entraînement (13) et comportant plusieurs logements pour les ébauches de tubes initiales,
soit sous la forme d'un dispositif rotatif à revolver actionné par intermittence au moyen de l'entraînement (13),
soit comme table de chargement.

16. Dispositif selon l'une des revendications 10 à 15, comprenant plusieurs premiers mandrins avec différentes formes de section transversale, en particulier avec une forme de section transversale circulaire ou ovale ou en forme d'étoile, qui sont associés respectivement à des ébauches de tube initiales avec des formes de section transversale correspondantes identiques, dans lequel, lors d'un échange d'une première ébauche de tube initiale avec une deuxième ébauche de tube initiale avec une autre section transversale, le premier mandrin utilisé pour la première ébauche de tube est échangé de manière correspondante avec un deuxième mandrin pour la deuxième ébauche de tube dans le dispositif.
